# EUROPÄISCHE PATENTANMELDUNG

(11) **EP 1 481 624 A2**
(43) Veröffentlichungstag der Anmeldung: **01.12.2004**
(21) Anmeldenummer: 04021205.2
(22) Anmeldetag: 26.04.1999
(51) Int. Cl.: A47J 39/00, A47J 27/16

(54) **Vorrichtung zur Erwärmung vorgefertigter in verschlossenen Behältern aufgenommenen Speisen**

(30) Priorität: 27.04.1998 DE 19818831
(62) Teilanmeldung aus: 99929037.2
(71) Anmelder: Walter, Hubert Eric, 89231 Neu-Ulm (DE); Airbus Deutschland GmbH, 21129 Hamburg (DE)
(72) Erfinder: Hiesener, Stefan, Dr., 21614 Buxtehude (DE); Gysemberg, Rudy, 20537 Hamburg (DE); Walter, Hubert Eric, 89231 Neu Ulm (DE)
(74) Vertreter: Pfenning, Meinig & Partner GbR

(57) **Zusammenfassung**

Die Erfindung betrifft eine Vorrichtung (2) zur Erwärmung vorgefertigter Speisen, wobei diese Speisen in offenen oder verschlossenen Behältnissen (5,6,7,8) aufgenommen sein können und mittels Induktionsheizspulen (12) erwärmt werden können. Im Catering-Bereich ist es üblich, dass vorbereitete Speisen mit bekannten Umluftherden erwärmt werden, wobei ein hoher Energieverbrauch und relativ lange Erwärmungszeiten sich insbesondere im mobilen Einsatz negativ auswirken. Bei induktiver Erwärmung von so vorbereiteten Speisen ist es erforderlich, entsprechendes Spezialgeschirr, das hierfür geeignet ist, zu verwenden. Es ist Aufgabe der Erfindung, die Erwärmung mit hoher Effektivität und guter Qualität bei geringem Aufwand an Zeit und Energie zu erreichen.

Die erfindungsgemäße Lösung beruht nunmehr darauf, dass die in den Behältnissen (5,6,7,8) aufgenommenen Speisen mit Induktionsheizspulen (12) und Heißdampf in abgeschlossenen Räumen erwärmt werden, und die äußeren Abmaße sowie die Form der Behältnisse (5,6,7,8) so gewählt ist, dass ein ganzzahliger Bruchteil einer für die Erwärmung zur Verfügung stehenden Fläche ausgefüllt wird.

## Beschreibung

Die Erfindung betrifft eine Vorrichtungen zur Erwärmung von Speisen, wobei die verschiedensten Anwendungsgebiete des Cateringbereiches, wie z.B. die Ausrichtung von Banketten, die Speiseversorgung in öffentlichen Einrichtungen, wie insbesondere Krankenhäuser und Pflegeheime sowie die Speiseversorgung in Fahrzeugen und hier insbesondere in Flugzeugen erfolgen kann.

Dabei geht die Erfindung von dem in DE 27 11 088 beschriebenen Verfahren und der Vorrichtung zum Erwärmen von Lebensmitteln aus, bei dem die Erwärmung der sich in geschlossenen Behältern befindenden Nahrungsmittel, mittels Induktionserwärmung von leitenden Elementen in den Behältern erfolgt.

Bei der dort beschriebenen Lösung ist die Verwendung von speziellen Nahrungsmittelbehältern, wie dies auch an anderen Orten bei der induktiven Erwärmung von Nahrungsmitteln der Fall ist, generell erforderlich.

Spezielles Geschirr oder, wie in DE 27 11 088 ebenfalls ausgeführt, besonders ausgestattete Behälter bzw. Tabletts zu verwenden, deren erhöhter Kostenaspekt nicht generell gerechtfertigt ist, wird auch bisher von den Anwendern in der Regel nur selten akzeptiert.

Außerdem erfolgt die Erwärmung, die durch induzierte Wirbelströme erreicht werden kann, bei den bekannten Systemen ausschließlich über Wärmeleitung, Konvektion und Strahlung, die insbesondere bei der Konvektion und Strahlung durch das die zu erwärmenden Nahrungsmittel umgebende Medium Luft behindert wird, so dass ein erhöhter Zeitaufwand und eine Verringerung des Wirkungsgrades in Kauf genommen werden muss.

Ein weiterer nachteiliger Aspekt, der bei dieser bekannten Lösung zu verzeichnen ist, besteht darin, dass es für die Effektivität dieses Verfahrens erforderlich ist, den Abstand zwischen den Induktionsspulen und den eigentlich zu erwärmenden metallischen Teilen, der für die Nahrungsmittelaufnahme vorgesehenen, zu erwärmenden Behälter sowie deren Positionierung optimal einzustellen. Hierfür wird dort eine aufwendige Mechanik vorgeschlagen, mit der die die Induktionsheizspulen aufnehmenden Elemente zumindest in ihrer Höhe vor dem Heizvorgang entsprechend eingestellt werden können.

Insbesondere in Flugzeugen ist es üblich, herkömmliche durch Widerstandsheizung betriebene Öfen, die mit Umluft betrieben werden, zur Erwärmung von Speisen vorzusehen. Durch den relativ geringen Wirkungsgrad dieser bekannten Öfen kommt es zu einem großen erforderlichen Zeit- und Energieaufwand, der sich insbesondere auf diesem Sektor äußerst nachteilig auswirkt. Die normalerweise in ihrer Dimensionierung standardisierten Öfen müssen relativ aufwendig mit den Behältern, zu denen auch herkömmliches Geschirr zählen kann, manuell bestückt und über einen Zeitraum von ca. 20 Min. entsprechend auf die gewünschte Temperatur erwärmt werden und im Nachgang dazu wieder einzeln entnommen, auf Tabletts einzeln zugeordnet werden und die vollständig bestückten Tabletts in Isolierwagen eingeführt und mit diesen zu den einzelnen Passagieren transportiert und dort ausgegeben werden.

Da die verschiedenen Cateringunternehmen auch verschiedene Behältnisse aus verschiedenen Materialien und in verschiedenen Dimensionen verwenden, kann es zu weiter erhöhtem Energieverbrauch und zu keiner optimalen Ausnutzung des in den dort verwendeten Öfen zur Verfügung stehenden Raumes kommen.

Des Weiteren ist aus JP-A-100 28 648 ein Topf zum Garen von Gyoza bekannt. Gyozas sind gefüllte Teigtaschen, die eine asiatische Spezialität darstellen. Die Gyozas können in diesem Topf induktiv erwärmt werden, wobei sie auf einer metallischen oder Kohlenstoff enthaltenden Bodenplatte angeordnet werden und unter der durch eine Platte aus nichtinduktivem Material getrennte Induktionsspulen angeordnet sind. Zusätzlich befindet sich in einem solchen Topf Wasser, das unter Ausnutzung der induzierten Wärme erwärmt wird, so dass die Gyozas in einem Topf unter Nutzung des Schnellkochtopf-Prinzips zubereitet werden können.

Es ist daher Aufgabe der Erfindung, eine Möglichkeit vorzugeben, um vorbereitete Speisen in kurzer Zeit, mit hoher Effektivität und guter Qualität, mit geringem Aufwand soweit zu erwärmen, dass sie zum Verzehr geeignet sind.

Erfindungsgemäß wird diese Aufgabe mit den Merkmalen des Patentanspruchs 1 gelöst. Vorteilhafte Ausgestaltungsformen und Weiterbildungen der Erfindung ergeben sich mit den in den untergeordneten Ansprüchen enthaltenen Merkmalen.

Bei der Erfindung ist es insbesondere wichtig, dass die Erwärmung der Speisen, wenn überhaupt, durch Konvektion, Induktion, oder Wärmestrahlung zumindest auch zusätzlich durch Heißdampf erreicht wird. Dadurch kann nicht nur die Effektivität, d.h. also der Wirkungsgrad verbessert und die Erwärmungszeit verringert, sondern auch eine Regeneration der vorbereiteten Speisen erreicht werden, die sich nicht nur in einer Verbesserung des ästhetischen Anblicks, sondern auch geschmacklich positiv auswirkt.

Hierfür kann einmal so verfahren werden, dass der Dampf direkt in einer Vorrichtung, mit der die Speisen erwärmt werden sollen, erzeugt wird oder extern erzeugter Dampf in eine solche Vorrichtung dosiert eingeleitet und die Temperatur im letzten Fall mit Hilfe der Induktion auf einem ausreichenden Niveau gehalten wird, so dass eine Kondensation des Dampfes während der Erwärmungsphase vermieden werden kann. Eine andere Möglichkeit besteht darin, den Dampf direkt in der Vorrichtung, bei der Erwärmung zu erzeugen, wobei in beiden Fällen die Temperatur so gewählt werden soll, dass ein Heißdampf für die Erwärmung der Speisen nutzbar ist.

Im günstigsten Fall kann der Dampf mit Hilfe der Induktionsheizspule erzeugt werden, so dass auf andere Heizsysteme bzw. Elemente verzichtet werden kann.

Günstigerweise werden die Behältnisse, in denen die zu erwärmenden Speisen enthalten sind, in eine entsprechende Vorrichtung eingesetzt und in Bezug zu den Induktionsheizspulen positioniert, wobei besonders günstig Induktionsheizspulen für Ober- und Unterhitze ober- bzw. unterhalb eines solchen Behältnisses, das zu erwärmende Speisen enthält, angeordnet werden können.

Da gemäß der Erfindung nahezu beliebige Behältnisse verwendet werden sollen, also auf kein Spezialgeschirr zurückgegriffen werden muss, ist es günstig die Wirbelströme in elektrisch leitenden Materialien (bevorzugt ferro- oder paramagnetisch), die günstig in Form von Folien, Folienteilen oder Blechen Bestandteil einer solchen Vorrichtung zur Erwärmung oder von Einschubbehältern, auf die später noch einzugehen sein wird, sind.

Dabei können insbesondere die für die Oberhitze zu nutzenden in der Regel metallischen flächigen Elemente geschlitzt oder kunststoffbeschichtet ausgeführt sein, wodurch sich eine selbstständige Regelung von Leistung und demzufolge auch der Temperatur, eine Erhöhung der Korrosionsbeständigkeit und/oder Wärmeabgabefähigkeit erreichen lässt.

Die flächigen Elemente, in denen durch Induktion die erforderliche Wärme für die Unterhitze erzeugt werden soll, können vorteilhaft auch für die Erzeugung des Dampfes ausgenutzt werden. Dabei können diese Teile in bestimmten Bereichen so ausgebildet sein, dass sie das für die Erwärmung und Regeneration der Speisen erforderliche Wasser für die Dampferzeugung aufnehmen können und beispielsweise kanalartig und besonders vorteilhaft ringförmig um das jeweilige Behältnis ausgebildet sind.

Solche Folien bzw. Bleche können Oberflächen behandelt sein, um einmal ihre Wärmeabgabefähigkeit zu verbessern und zum anderen einen Korrosionsschutz zu bilden.

Dabei können die Folien bzw. Bleche einzeln einer Induktionsheizspule, aber auch ein solches Element mehreren solcher Spulen zugeordnet, angeordnet werden.

Es besteht außerdem die Möglichkeit, eine zusätzliche Induktion in den die Speisen enthaltenden Behältnissen auszunutzen, in denen ein solches Behältnis mit einem Ring aus einem hierfür geeigneten Material umschlossen ist, der das Feld in Richtung des Behältnisbodens bündeln kann.

Zu beachten ist, dass das für die Unterhitze zuständige flächige Element ggf. nur bestimmte Teile des Feldes absorbieren kann, wenn es beispielsweise aus einem relativ ungünstigen Material besteht, geschlitzt ist oder keine ausreichende Dicke für eine volle Skintiefe aufweist, so dass der übrige Anteil in den Boden des Behältnisses übergeht.

Eine weitere Möglichkeit, die mit der erfindungsgemäßen Lösung eingesetzt werden kann, besteht darin, mit Deckeln verschlossene Behältnisse zu verwenden, wobei die Deckel aus einem elektrisch leitenden Material, z.B. Metall, bestehen und ähnlich wie z.B. Joghurtbecher ausgebildet sein können. Dabei kann der obere Rand des Behältnisses und/oder der Deckel so ausgestaltet sein, dass diese Behältnisse in ein rahmenförmiges Element eingesetzt oder eingehangen werden können, und so in einer entsprechenden Vorrichtung die Erwärmung durchgeführt werden kann. Dabei kann die Rasterung des rahmenförmigen Elementes und die Größe der Behältnisse optimal, auf die für die Erwärmung zur Verfügung stehende Fläche angepasst werden, so dass eine maximale Raumausnutzung möglich ist.

Der für die Erwärmung zu nutzende Dampf kann aber auch durch Erhitzen von Wasser erzeugt werden, das beispielsweise in einen porösen Körper, der zumindest teilweise aus einem elektrisch leitenden Material bestehen kann, gespeichert werden kann. Hierfür können z.B. verschiedene gesinterte Metallkörper mit ausreichend großen Poren und Porenvolumen eingesetzt werden. Ein solcher poröser Körper kann als Ring ausgebildet werden, der einen größeren Durchmesser als die jeweiligen verwendeten Behältnisse aufweist und in den solche Behältnisse eingesetzt werden können, wobei hier wieder eine entsprechende Positionierung zu mindestens einer Induktionsheizspule zu berücksichtigen ist. Die porösen Körper haben weiter den Vorteil, dass in ihnen ohne größeren Aufwand eine ganz bestimmte Menge an Wasser aufgenommen und gespeichert werden kann. Die porösen Körper können aber auch als reiner Wasserspeicher aus einem anderen Material bestehen und die Verdampfung unter Ausnutzung von Wärmeleitung, Konvektion und/oder Strahlung zu den Körpern erreicht werden.

Eine weitere Möglichkeit, mit der Wasser für die Verdampfung bereit gestellt werden kann, besteht darin, dass beispielsweise röhrchenförmige Gebilde verwendet werden, in deren Hohlräumen das Wasser zwischengespeichert werden kann. Der gebildete Dampf kann dann gegebenenfalls durch permeable Membranen diffundieren oder aus Öffnungen austreten. Grundsätzlich besteht auch die Möglichkeit, das Wasser in austauschbaren Vorratsfläschchen zur Verfügung zu halten, die bevorzugt bei der Erwärmung mit ihrer Öffnung nach unten angeordnet werden. So kann Wasser oder extern erzeugter Dampf in Röhrchen gefüllt oder hindurch geleitet werden, bei denen Löcher ggf. temporär mit Folien, vorteilhaft aus semipermeablem Material, verschlossen sind.

Das Wasser kann aber auch in vollständig aus Folien bestehenden Behältnissen zwischengespeichert werden. Es können reine Kunststofffolien, Kunststoff- und Metallfolien gemeinsam oder metallbeschichtete Folien verwendet werden. Ein solches Behältnis kann ein Einwegprodukt sein. Das Wasser bzw. der bereits gebildete Wasserdampf kann nach manuellem Öffnen der Folie oder temperaturbedingt nach Überschreiten einer bestimmten Temperatur bei der Erwärmung austreten.

Für den Fall, dass Behältnisse für die zu erwärmenden Speisen verwendet werden, die durch ihre Gestaltung und Materialauswahl geeignet sind, um induktiv erwärmt zu werden, besteht in einfachster Form die Möglichkeit, das für die Dampferzeugung erforderliche Wasser direkt in einem solchen Behältnis vor der Erwärmung der Speisen zur Verfügung zu halten, wobei hierfür eventuell separierte Behältnisbereiche oder zumindest teilweise flexible Behältnisse aus/mit Folienmaterial verwendet werden können, die bei steigendem Dampfdruck aufplatzen, Öffnungen freigeben oder sich gegebenenfalls auflösen.

Wird der Dampf, der auf die Erwärmung der Speisen genutzt wird, direkt in den Behältnissen erzeugt, ist es zweckmäßig, das Behältnis oder einen Bereich um dieses Behältnis mit einem deckelartigen Gebilde, bevorzugt gasdicht abzudecken, so dass ein in sich geschlossenes Milieu entsteht. Diese Lösung bietet sich insbesondere für den Fall an, dass bereits bestückte größerformatige Tabletts bzw. solche ähnlichen Gebilde verwendet werden, auf denen Behältnisse mit verschiedenen Speisen bzw. Getränken angeordnet werden können, bei denen nicht alle erwärmt werden sollen. Dies hat den Vorteil, dass ein solches Tablett automatisch vorbestückt werden kann und im Nachgang zur Erwärmung keine zusätzlichen Arbeitsaufwendungen mehr erforderlich sind, um die verschiedenen Speisen und Getränke zu einer gemeinsamen Portion zusammenfassen zu müssen.

Wichtig ist es außerdem, dass die für die Erwärmung erforderliche Dampfmenge durch Bereitstellung einer speisendspezifischen Wassermenge beeinflusst wird, so dass die Qualität der erwärmten Speisen nicht negativ, sondern positiv beeinflusst wird.

Im Gegensatz zu der bereits beschriebenen Tablettlösung kann die Erwärmung von in Behältnissen aufgenommenen, vorbereiteten Speisen auch durch geringfügige Modifikation von herkömmlichen Vorrichtungen, wie sie beispielsweise die bisher in Flugzeugen verwendeten Umluftöfen sind, erreicht werden. Dabei werden solche Erwärmungseinrichtungen zumindest nahezu identisch dimensioniert und mit entsprechenden Anschlussmöglichkeiten für Elektroenergie ausgestattet.

Die Elemente zur Steuerung und Bedingung einer solchen Erwärmungseinrichtung für Speisen sollten auf einem abnehmbaren Paneel angeordnet oder in einer Tür integriert sein, um den erforderlichen Raum zu minimieren. Für die Steuerung können auch andere Elemente, wie die beispielsweise in Luftfahrzeugen ohnehin vorhandene Elektronik verwendet werden.

Vorteilhaft ist die Kombination von Erwärmung und alternierender Kühlung in einem solchen Ofen oder Speisetransportwagen. Es können kombinierte Geräte verwendet werden, in denen die Speisen und Getränke erst gekühlt und erst unmittelbar vor dem Verzehr erwärmt werden. Dadurch kann Lagerraum gespart werden. Für die Kühlung kann auf herkömmliche Prinzipien zurückgegriffen werden.

Die mit Speisen befüllten Behältnisse können in zusätzliche Einschubbehälter eingeführt werden und durch bevorzugt ihrer eigenen Form und Dimensionierung so zu Induktionsheizspulen positioniert, dass eine optimale Erwärmung erreicht wird. Solche Induktionsheizspulen sind zumindest im Boden eines solchen Einschubbehälters angeordnet, wobei auch für das Erreichen einer entsprechenden Oberhitze entsprechende Induktionsheizspulen im Oberteil eines solchen Einschubbehälters integriert sein können. Zur induktiven Erwärmung können Boden und Decke eines solchen Einschubbehälters, wieder wie bereits beschrieben, mit flächigen Elementen, die durch Induktion erwärmt werden können, versehen sein. Außerdem kann in einem solchen dann geschlossenen Einschubbehälter auch wieder die Dampferzeugung, wie ebenfalls bereits beschrieben, auch durch nahezu ausschließlich induktive Beheizung erreicht werden.

Solche Einschubbehälter können auch zur Erwärmung/-Regeneration von z B. bereits auf Tellern drapierten Speisen eingesetzt werden, wobei auch hier die Dimensionierung der Behälter unter Beachtung der üblichen Normgrößen erfolgen sollte.

Da, wie bereits erwähnt, Standardmaße für die Vorrichtung zur Erwärmung (Öfen) und Speisetransportwagen, mit denen die erwärmten Speisen an den Ort des eigentlichen Verzehrs von der Erwärmung transportiert werden, beachtet werden müssen, ist es zweckmäßig, die zur Erwärmung verwendeten Behältnisse entsprechend raumoptimiert zu dimensionieren, so dass der für die Erwärmung und den Transport zur Verfügung stehende Raum maximal genutzt werden kann. Hierfür beträgt die jeweils in einer Ebene zur Verfügung stehende Fläche nahezu exakt ein ganzzahliges Vielfach des Flächenbedarfs der einzelnen Behälter, wodurch eine Erhöhung der Flächenausnutzung und Kapazität um bis zu 50 % erreichbar ist.

Solche Speisetransportwagen sind in der Regel nach außen isoliert, um ein unerwünschtes Abkühlen bzw. Erwärmen, der darin enthaltenen entsprechenden Speisen zumindest zu behindern. Hierfür werden herkömmliche Isoliermaterialien verwendet, die begrenzte K-Werte erreichen und eine Masseerhöhung bewirken. Insbesondere in Flugzeugen, in denen solche Speisetransportwagen üblicherweise als Trolleys bezeichnet werden, ist es aber äußerst günstig, die Isolierung durch Erzeugung eines Vakuums, zumindest jedoch eines Teilvakuums, in der Wandung eines solchen Trolleys zu erreichen. Da in Flugzeugen ab bestimmten Flughöhen ohnehin ein entsprechender Unterdruck zur Verfügung steht und ein solches Unterdruckerzeugungssystem ohnehin für die dort üblicherweise zu verwendenden Toilettensysteme vorhanden ist, kann durch einen entsprechenden Anschluss zumindest ein Teilvakuum erzeugt bzw. bei Bedarf wieder ohne weiteres erneuert werden. Dabei kann dann nicht nur die Wandung teilevakuiert, sondern auch bei entsprechender Abdichtung der gesamte Inhalt eines solchen Trolleys zumindest teilevakuiert werden. Außerdem kann das Vakuum oder Teilvakuum mittels Ejektoren günstig erzeugt werden. Entsprechend können auch die Einschubbehälter allein oder zusätzlich vakuumiert werden.

Die Erwärmung der Speisen kann aber auch direkt in einem solchen Speisetransportwagen erfolgen, wobei diese Möglichkeit bevorzugt dann angewendet werden kann, wenn bereits vorbestückte Tabletts, auf denen verschiedene zu erwärmende bzw. kalt zu haltende Speisen und Getränke angeordnet sind.

In diesem Fall können ebene, zungenartige Elemente verwendet werden, die mit einem Hochspannungsfrequenzgenerator über Leitungen verbunden sind und in die Induktionsheizspulen integriert sind. Diese zungenartigen Elemente können dann durch geöffnete Türen von zumindest einer Seite oder z.B. in den Seitenwänden ausgebildeten Schlitzen in einen solchen Trolley eingeführt werden, wobei die Anordnung der Induktionsheizspulen, gegebenenfalls in Verbindung mit den ebenflächigen Elementen, die induktiv erwärmt werden sollen, entsprechend der Positionierung der Behältnisse, in denen die zu erwärmenden Speisen aufgenommen sind, erfolgt, so dass nur dort, wo nötig erwärmt und die anderen Speisen und Getränke nahezu unbeeinflusst bleiben.

An den zungenförmigen Elementen können Profilierungen ausgebildet sein, mit deren Hilfe die Positionierung oder zu erwärmenden Speisen erleichtert wird.

Zur Erkennung der Beschaltung der Induktionsheizspulen und auch zur Messung der Temperatur können die Induktivitätsänderung, die Impedanz, die Kapazität und/oder die Frequenzänderung berücksichtigt werden. Die entsprechende Sensorik und/oder Strom- bzw. Spannungsmessung erfolgt dann bevorzugt mittels der Elektronik für die Steuerung des Frequenzgenerators.

Da in den zungenförmigen Elementen mehrere Induktionsheizspulen angeordnet sein können, die jedoch nicht immer gleichzeitig für die Erwärmung von Speisen benutzt werden sollen bzw. müssen, ist es günstig, eine so genannte "Topferkennung" vorzusehen, die z.B. in Form einer Induktivitäts-, Impedanz- oder Kapazitätsmessung erfolgen kann.

Da sich der Ohmsche Widerstand und die Induktivität vieler Werkstoffe temperaturabhängig verändert, können diese Eigenschaften zur kontaktlosen Temperatur-überwachung genutzt werden.

Solche zungenartigen Elemente in Verbindung mit dem entsprechenden Hochfrequenzgenerator können ortsfest in Gebäuden, aber auch in Fahrzeugen installiert sein, so dass ein entsprechend vorbestückter Speisetransportwagen zu einer solchen Vorrichtung transportiert, mit dieser entsprechend die gewünschten Speisen erwärmt und anschließend zu dem jeweiligen Endverbraucher transportiert werden. Dadurch lässt sich ein erheblicher Rationalisierungseffekt für die verschiedensten Anwendungsbereiche erreichen.

Dabei können diese zungenartigen Elemente selbstverständlich auch in mehreren Ebenen entsprechend über bzw. unterhalb der zu erwärmenden Behältnisse und ggf. dazwischen z.B. Bleche angeordnet sein.

Vorteilhaft ist es in jedem Fall die Induktionsspulen in herausnehmbaren Trägern anzuordnen, so dass sie zur Reinigung aus dem Ofen entnommen werden können.

Der elektronisch gesteuerte Hochfrequenzgenerator wird in einem Frequenzbereich oberhalb der Hörgrenze für den Menschen, normalerweise im Bereich zwischen 20 und 50 kHz betrieben, wobei insbesondere in der Luftfahrtanwendung die Elektronik bevorzugt redundant vorhanden ist, an der Elektroenergieversorgung entsprechende Filter verwendet werden und dort ein Eingang von vorzugsweise 400 Hz Anwendung findet. Sowohl die Elektronik, wie auch der Generator sollten in einem separaten Gehäuse, das bevorzugt auch geeignet geschirmt ausgebildet ist, angeordnet werden, um negative Einflüsse auf die Umgebung zu vermeiden.

Günstig ist es insbesondere oben und unten in einem Ofen Zusatzbauteile, als Ferrite anzuordnen, um einer Gehäuseerwärmung entgegenzuwirken und das elektromagnetische Feld zu beeinflussen (EMV-Schutzfunktion).

Als für die Erwärmung geeignete Behältnisse können solche, die in Sandwichbauweise, außen aus einem Kunststoff, auch in geschäumter Form (Verbesserung der Isolierung), gegebenenfalls mit einer Faserverstärkung versehen, und innenseitig mit Metalleinsätzen oder Beschichtungen verwendet werden. Dabei ist es besonders günstig, dass auch der Rand oberhalb mit einem metallischen Material umschlossen ist, so dass keine direkte Berührung zwischen Kunststoff und Speise auftreten kann. Diese Behältnisse können auch mit einem Deckel, ebenfalls aus einem solchen Verbundmaterial, entsprechend metallisch beschichtet bzw. ausschließlich aus Metall verschlossen werden.

Der Deckel oder ein Einsatz kann auch mit einer separaten Spule, die ausschließlich der Verdampfung von Wasser dient, versehen sein. Der Deckel oder ein Einsatz von Behältnissen oder anderen Elementen kann so gestaltet sein, dass auf ihm Lebensmittel (z.B. Brot), Getränke oder andere Gegenstände (Handtücher) ebenfalls erwärmt werden können.

Der Verbund von Kunststoff und Metall kann dauerhaft z.B. durch Laminieren, Einspritzen, Verkleben erfolgen. Es besteht jedoch auch die Möglichkeit, einen entsprechenden Metalleinsatz, der in den Kunststoff formangepasst eingesetzt werden kann, zu verwenden. In diesem Fall kann der Metalleinsatz aus dem Kunststoff entfernt, getrennt gelagert und in dieser Form relativ einfach gereinigt werden.

Eine weitere vorteilhafte Ausgestaltung der Erfindung kann dadurch erreicht werden, dass mit hierfür geeigneten Sensoren, die verschiedenen Speisen und dabei insbesondere auch die zu erwärmenden Speisen anhand der verwendeten Behältnisse erkannt werden können, so dass eine Erwärmung gänzlich unterbleibt oder ein für die jeweilige Speise optimales Erwärmungsregime ausgewählt werden kann. Hierfür können Behältnisse aus verschiedenen Farben oder mit einer entsprechenden Codierung versehene, verwendet werden, so dass die Temperaturen und Erwärmungszeiten optimal ausgewählt werden können.

Vorteilhaft wirkt es sich auch aus, wenn in den mit vorbereiteten Speisen befüllten Behältnissen zumindest ein Teilvakuum durch Innendruckabsenkung erzeugt wird. Dadurch kann in vielen Fällen sogar auf eine Kühlung auch über mehrere Tage verzichtet und die Oxidation der Lebensmittel zumindest behindert werden. Hierfür können die Behältnisse zusätzliche Anschlüsse mit Ventilen aufweisen, die an eine Unterdruck erzeugende Einheit (z.B. einen Ejektor) anschließbar sind.

Bei der Erfindung können außerdem Temperaturmessungen durchgeführt werden, um die jeweiligen Wirbelströme und demzufolge auch die entsprechende Erwärmung zu steuern bzw. zu regeln. Die Temperaturmessung in Verbindung mit einer Zeitmessung sichert, dass die jeweiligen Speisen auf die richtige Temperatur erwärmt werden und es kann eine unerwünschte Beeinträchtigung der Speisen durch Überhitzung vermieden werden.

Mit der Temperaturmessung wird insbesondere die Leistungselektronik zur Steuerung des Frequenzgenerators bzw. die Ansteuerung der einzelnen Induktionsspulen beeinflusst.

Hierfür können die elektrischen bzw. magnetischen Spulenparameter, z.B. über Hilfsspulen gemessen werden. Es besteht aber auch die Möglichkeit, die Temperatur über Sensoren zu messen. Dabei können solche verwendet werden, die mit den jeweiligen Behältnissen oder ggf. einem rahmenförmigen Element, in das die Behältnisse eingesetzt werden können, unmittelbar kontaktiert werden. Hierfür können stift- oder federförmige Temperaturmesskontakte, beispielsweise auf Halbleiterbasis messende, verwendet werden. Stifte können für die Messung in Öffnungen in den Behältnissen eingreifen.

Die bereits erwähnten Einschubbehälter oder gegebenenfalls auch entsprechende Behältnisse für Speisen sollten vorteilhaft in Bezug auf Breite und Länge unterschiedlich ausgebildet werden, so dass sie immer nur in einer bestimmten Lage in eine Vorrichtung zur Erwärmung bzw. einen Speisetransportwagen eingeführt werden können. Ihre äußere Gestaltung sollte so sein, dass sie sicher und bei geringstem Platzerfordernis auch stapelbar sind. Außerdem sollten Randbereiche vorhanden sein, die es ermöglichen, dass in einer Reihe bzw. nebeneinander angeordnete Einschubbehälter bzw. Behältnisse formschlüssig, z.B. durch Verhaken, temporär miteinander verbunden werden können.

Die Einschubbehälter sollten im Wesentlichen aus hochtemperaturfesten Kunststoffen (z.B. Polyhydroxibuterat - kompostierbar) gefertigt sein, die an ihren seitlichen Rändern Elektroden, die als Kontakte dienen, aufweisen. Über diese Elektroden kann die hochfrequente Elektroenergie von außen, zu den im Boden bzw. im Deckenbereich angeordneten Induktionsheizspulen über ebenfalls dort integrierte Verbindungsleitungen gelangen. Diese Elektroden können gleichzeitig für den Halt der Einschubbehälter in Verbindung mit im Gehäuse eines Ofens angeordneten Gegenelektroden dienen.

Vorteilhaft sind die Induktionsheizspulen sowohl seriell, wie auch parallel angeordnet und geschaltet.

Mit der Erfindung ist es möglich, die Zeit für die ausreichende und optimale Erwärmung von Speisen im Catering-Bereich um mindestens 50 % zu verringern und auch eine beträchtliche Erhöhung des Wirkungsgrades zu erreichen.

Nachfolgend soll die Erfindung an Hand von Ausführungsbeispielen näher beschrieben werden.

Dabei zeigen:
- Figur 1: eine Vorrichtung zur Erwärmung mit zungenförmigen Elementen, die in einen geöffneten Speisetransportwagen einführbar sind;
- Figur 2: mehrere Speisetransportwagen als Batterie zur seriellen Bestückung mit einer Vorrichtung zur Erwärmung mit zungenförmigen Elementen;
- Figur 3: zungenförmige Elemente mit verschiedenen Behältnissen für Speisen und einem Tablett;
- Figur 4: eine Vorrichtung zur Erwärmung von Speisen mit Einschubbehälter;
- Figur 5: Einschübe mit Durchströmkanälen und
- Figur 6: mehrere rahmenförmige Elemente (Racks), zur Aufnahme von Behältnissen, in gestapelter Anordnung.

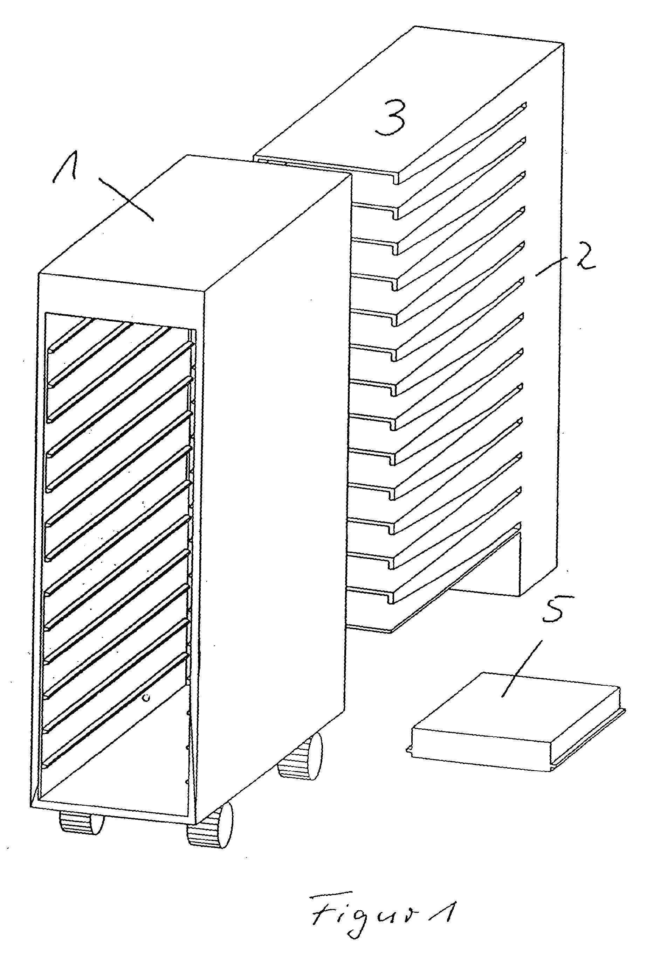

In der Figur 1 ist eine Vorrichtung 2 zur Erwärmung von in Behältnissen aufgenommenen vorbereiteten Speisen dargestellt, die in mehreren übereinander angeordneten Ebenen zungenförmige Elemente 3 aufweist, in denen jeweils mindestens eine Induktionsspule angeordnet ist. Die zungenförmigen Elemente 3 sind so dimensioniert, dass sie in einen Speisentransportwagen 1 einführbar sind, in dem auf mehreren Ebenen zu erwärmende Behältnisse 5 oder solche auf Tabletts angeordnete Behältnisse angeordnet sind. Solche Behältnisse können auch geschlossene Boxen sein. Die induktive Erwärmung kann wieder mit hierfür geeigneten Behältnissen oder zusätzlichen ebenen Blechen oder Folien aus geeigneten Materialien, wie bereits im allgemeinen Teil der Beschreibung erklärt, erfolgen.

Dabei sind die zungenförmigen Elemente 3 bei diesem Beispiel am Rand profiliert, um eine Stabilitätserhöhung und eine einfachere und exaktere Positionierung, der zu erwärmenden Speisen zu ermöglichen, wobei sich für letzteres eine asymmetrische Profilierung zusätzlich günstig auswirkt.

Die zungenförmigen Elemente 3 können so lang sein, dass sie die gesamte Länge des Speisentransportwagens 1 überdecken und so mehrere dort hintereinander angeordnete Behältnisse gleichzeitig oder lediglich gezielt ausgewählte und zu den Induktionsheizspulen positionierte Behältnisse erwärmt werden.

Außerdem ist ein Einschubbehälter 5, der in den Speisentransportwagen 1 einführbar ist, dargestellt, in den wieder andere Behältnisse mit zu erwärmenden Speisen eingeführt werden können. In diesen Einschubbehälter 5 können metallische Teile, die induktiv erwärmt werden können, integriert sein, so dass Oberund Unterhitze ausgenutzt werden können.

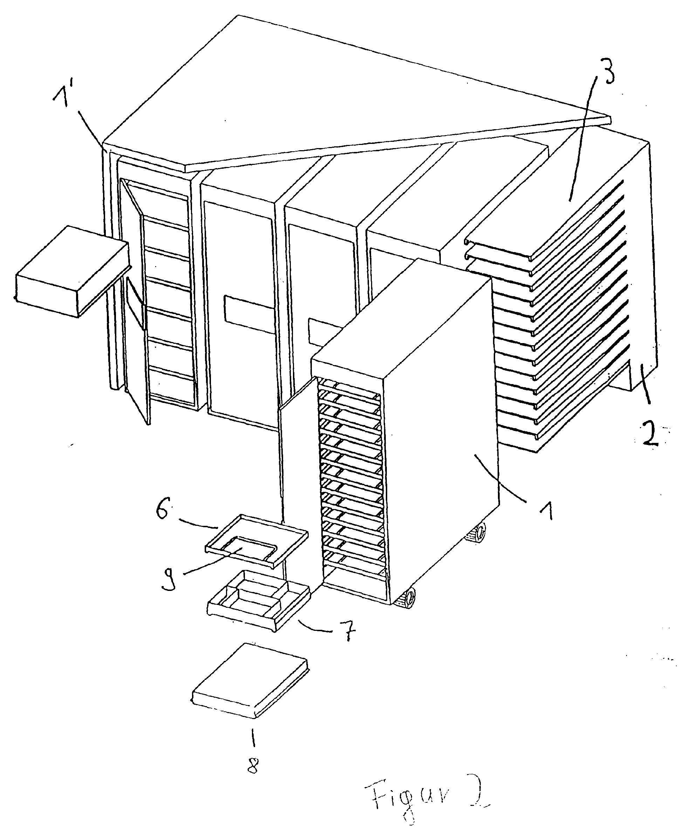

In Figur 2 ist eine Batterie mehrerer Speisetransportwagen 1 gezeigt, die durch die mit der Erfindung erreichbaren kurzen Erwärmungszeiten auch seriell eingesetzt werden können. Dadurch kann eine Vorrichtung 2 zur Erwärmung, hier wieder mit zungenförmigen Elementen 3, für mehrere Speisetransportwagen verwendet werden, so dass auch die Bestückung von Tabletts rationalisiert und die erforderliche Anzahl verringert werden kann.

In der Figur 2 ist links ein Transportwagen 1', mit größeren Aufnahmeboxen erkennbar, die für die Aufnahme von z.B. Duty-Free-Artikeln bzw. Flaschen geeignet sind (als Zwischenlager).

Vor dem mit Bezugszeichen 1 versehenen Speisetransportwagen 1 sind verschiedene Behältnisse 6, 7 und 8 dargestellt. Das Behältnis 6 ist tablettförmig und nur für die Erwärmung vorgesehen. Dabei können mindestens ein Behältnis (nicht dargestellt) eingesetzt werden, das bevorzugt nach oben mit einem Deckel oder einer Haube abgedeckt werden kann, so dass erzeugter Dampf im Behältnis für Erwärmung und Regeneration ausgenutzt werden kann. Dabei können im/am Behältnis 6 metallische Folie 9 vorhanden sein, die induktiv erwärmt werden kann, so dass auf Spezialgeschirr verzichtet werden kann und Behältnisse aus verschiedensten Materialien oder Kompositen verwendet sind.

Das Behältnis 7 ist eine Box, mit einer mehrfachen Innenraumaufteilung zur Trennung von verschiedenen Bereichen, die heiß, kalt und neutral sein können, so dass eine Vorbestückung für eine Portion oder ein ganzes Menü möglich ist.

Das untere Behältnis 8 ist abgeschlossen und es kann ähnlich, wie bei einem Behältnis 7 ein Menü, ausschließlich zu erwärmende Speisen eingesetzt oder auch z.B. Saunatücher oder ähnliche Gegenstände vorgewärmt werden können.

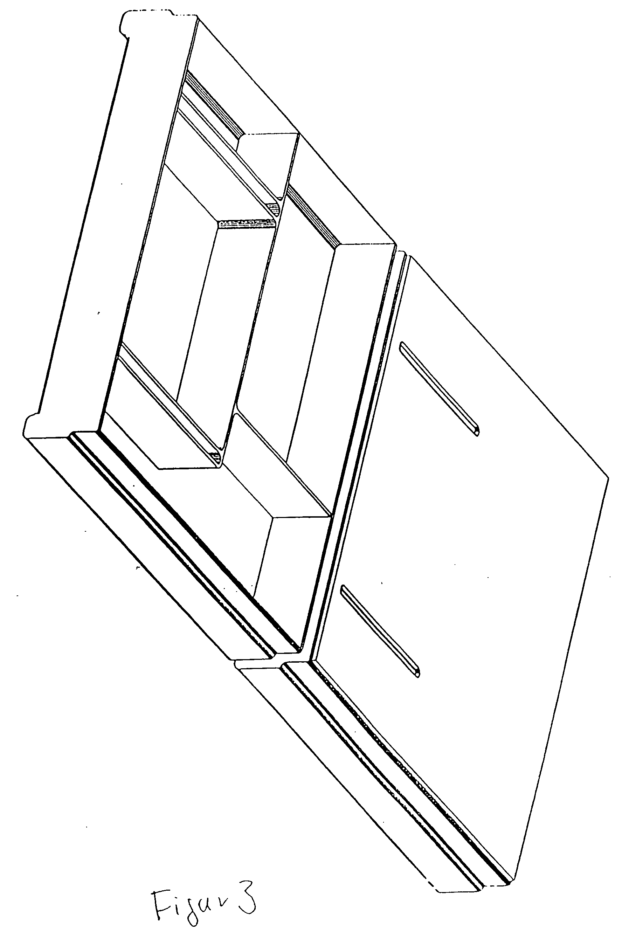

In der Figur 3 sind drei zungenförmige Elemente in Verbindung mit verschiedenen Einschubbehältern dargestellt. Dabei ist der obere boxförmig und kann z.B. ein vollständiges Menü enthalten sowie ganz oder teilweise geschlossen sein. Der mittlere ist eine geschlossene Box und unten ist ein Tablett gezeigt.

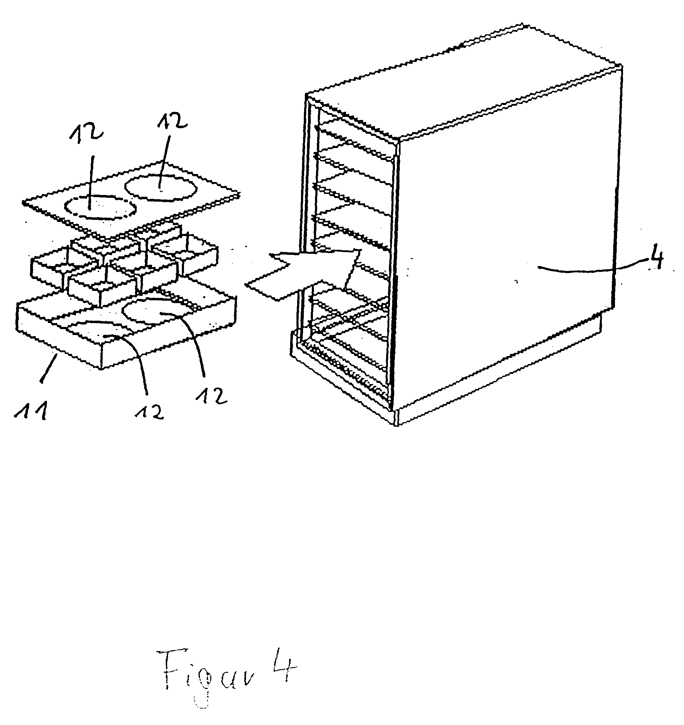

In der Figur 4 ist ein weiteres Beispiel einer erfindungsgemäßen Vorrichtung 10 dargestellt, das ähnlich wie herkömmliche Öfen eingesetzt werden kann. Dabei können Einschubbehälter 11 verwendet werden, die vorab befüllt werden können. Dabei können in diesen auch herkömmliche Teller mit Speisen erwärmt werden, wobei sich auch hier der erzeugte bzw. verwendete Dampf in Verbindung mit induktiver Erwärmung vorteilhaft auswirkt.

Schematisch sind in den Einschubbehältern 11 die eigentlichen Wärmequellen in Form von hier kreisförmigen metallischen Folien 12, mit denen die umgewandelte Energie als Wärme ausgenutzt werden kann, dargestellt.

Die Elektronik und der Generator sind hier günstig im hinteren Teil der Vorrichtung 4 untergebracht. Zur Erleichterung von Wartung und Reparatur kann aber auch eine Schubladenlösung, von vorn zugänglich oder gar ausziehbar, verwendet werden.

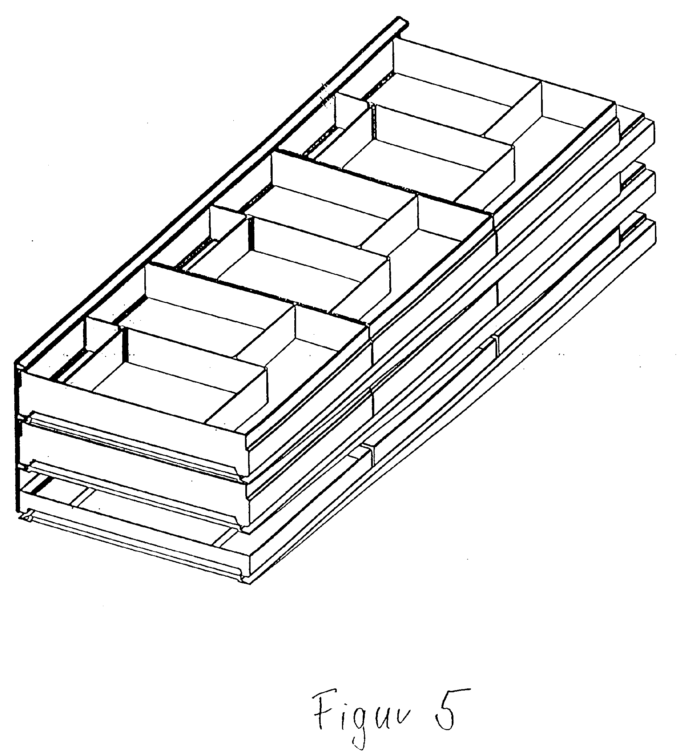

Mit dem in der Figur 5 dargestellten Beispiel wird ein Problem berücksichtigt, das auftreten kann, wenn Behältnisse, Einschubelemente oder Tabletts verwendet werden, die dicht aneinandergereiht und ggf. auch formschlüssig temporär miteinander verbunden (verbesserte Handhabbarkeit) in einem Speisetransportwagen in mehreren Ebenen übereinander angeordnet werden. In diesem Fall wird eine nahezu geschlossene Fläche je Ebene gebildet und der Wärmeaustausch behindert. Da Speisetransportwagen in der Regel von oben gekühlt werden, indem dort ein Trockeneis enthaltendes Fach angeordnet ist, kann es dazu kommen, dass die oberste Ebene so geköhlt wird dass die Speisen tiefgefroren, die nächste Ebene gefroren und die darunter liegende kalt bis in den weiter unten liegenden Ebenen überhaupt keine Kühlung erreicht werden kann. Dies kann zu Beeinträchtigungen, insbesondere der in den unteren Ebenen angeordneten Speisen und mit deren Verzehr zu schwerwiegenden Erkrankungen führen.

Um diesem Nachteil entgegenzuwirken und ein Durchdringen von Kälte auch zu den unteren Ebenen zu ermöglichen, sind in den Einschubbehältern, hier eine Menübox dargestellt, Durchströmkanäle ausgebildet, die bevorzugt um die zu erwärmenden Speisen bzw. Behältnisse, die solche enthalten, angeordnet sind. Mit den Durchströmkanälen ist eine relativ gleichmäßige Kühlung in jeweils einer Ebene und in den verschiedenen Ebenen erreichbar.

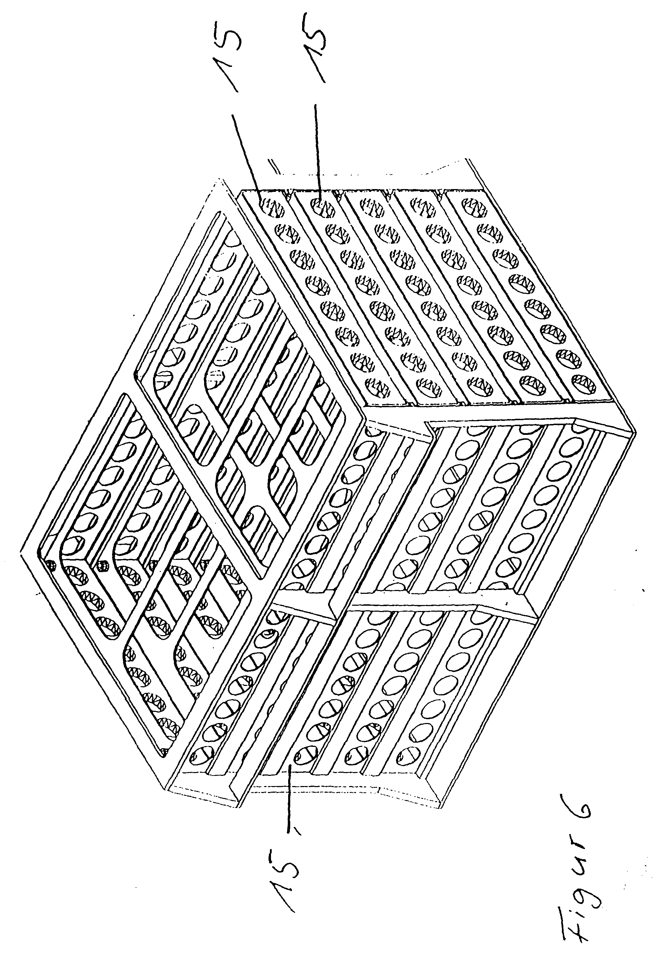

In der Figur 6 sind mehrere rahmenförmige Elemente 15 (Racks) in gestapelter Anordnung gezeigt. Diese können im Wesentlichen aus einem geeigneten Kunststoff oder z.B. auch Aluminium bestehen. Es können auch Blenden aus einem schlecht wärmeleitenden Material (z.B. Holz) angebracht sein, die dann auch Grifffunktion übernehmen können.

Diese Elemente 15 erleichtern primär die Handhabung, können aber auch als Adapter zur Anpassung der verschiedenen Größen von Behältnissen bzw. verschieden großen Öfen oder Speisetransportwagen dienen.

In nicht dargestellter Form können an den Elementen 15 Deckel vorhanden sein, die mittels Scharnieren die in Behältnissen aufgenommenen Speisen temporär abdecken. Dies kann in Erwärmungs-, Lager- oder Kühlphasen der Fall sein. Die Deckel können ein- oder mehrteilig sein, wobei zumindest teilweise induktiv erwärmbare Bereiche an einer solchen Deckelkonstruktion vorhanden sein sollten. Die Deckel können auch teilweise als Wasserspeicher fungieren. Das Wasser kann über beispielsweise temporär verschließbare Öffnungen verdampft werden.

## Patentansprüche

1. Vorrichtung zur Erwärmung vorgefertigter in verschlossenen Behältnissen aufgenommenen Speisen mit Induktionsspulen und Heißdampf, bei der der Heißdampf mit der induktiv erzeugten Wärme in den Behältnissen erzeugt wird,
**dadurch gekennzeichnet, dass** die äußeren Abmaße und die Form der Behältnisse (5, 6, 7, 8) so gewählt ist, dass ein ganzzahliger Bruchteil einer für die Erwärmung zur Verfügung stehenden Fläche ausgefüllt wird.

2. Vorrichtung nach Anspruch 1,
**dadurch gekennzeichnet, dass** in den Behältnissen (5, 6, 7, 8) eine speisenspezifische Wassermenge enthalten ist.

3. Vorrichtung nach Anspruch 1 oder 2,
**dadurch gekennzeichnet, dass** Induktionsheizspulen (12) zumindest im Boden von Einschubbehältern (11) integriert sind, mit denen Wirbelströme in darüber angeordneten Elementen induzierbar sind und diese Elemente den Speicher oder die Aufnahme eines Speichers für die zu verdampfende Wassermenge bilden.

4. Vorrichtung nach einem der Ansprüche 1 bis 3,
**dadurch gekennzeichnet, dass** zusätzlich im Deckenbereich der Einschubbehälter (11) Induktionsheizspulen (12) mit zumindest darunter liegenden flächigen Elementen, in die Wirbelströme induzierbar sind, angeordnet sind.

5. Vorrichtung nach Anspruch 4,
**dadurch gekennzeichnet, dass** die flächigen Elemente geschlitzt und/oder kunststoffbeschichtet sind.

6. Vorrichtung nach einem der Ansprüche 1 bis 5,
**dadurch gekennzeichnet, dass** ein poröser Körper aus elektrisch leitendem Material zur Aufnahme von Verdampfungswasser in Bezug zu mindestens einer Induktionsheizspule (12) so positioniert ist, dass durch induktive Erwärmung des Körpers das Wasser verdampft.

7. Vorrichtung nach einem der Ansprüche 1 bis 6,
**dadurch gekennzeichnet, dass** Wasser in einem aus Folie bestehenden Behältnis zur Dampferzeugung enthalten ist.

8. Vorrichtung nach einem der vorhergehenden Ansprüche, **dadurch gekennzeichnet, dass** Induktionsheizspulen in zungenförmigen Elementen (3) integriert sind.

9. Vorrichtung nach Anspruch 8,
**dadurch gekennzeichnet, dass** die zungenförmigen Elemente (3) ortsfest installiert und mit einem steuerbaren Frequenzgenerator verbunden sind.

10. Vorrichtung nach Anspruch 8 oder 9,
**dadurch gekennzeichnet, dass** die Induktionsheizspulen in den zungenförmigen Elementen (3) in Bezug zu Behältnissen (5, 6, 7, 8, 11), die zu erwärmende Speisen und eine zu verdampfende Wassermenge enthalten, und auf einem Tablett positioniert sind, angeordnet und die Behältnisse (5, 6, 7, 8, 11) mit einer Abdeckung verschlossen sind.

11. Vorrichtung nach einem der Ansprüche 8 bis 10,
**dadurch gekennzeichnet, dass** die zungenförmigen Elemente (3) in mehreren Ebenen über- und/oder nebeneinander angeordnet sind.

12. Vorrichtung nach einem der Ansprüche 8 bis 11,
**dadurch gekennzeichnet, dass** an zungenförmigen Elementen (3) Profilierungen ausgebildet sind.

13. Vorrichtung nach einem der Ansprüche 1 bis 12,
**dadurch gekennzeichnet, dass** der Randbereich der Behältnisse (5, 6, 7, 8) zumindest teilweise so ausgebildet ist, dass Ränder benachbarter Behältnisse (5, 6, 7, 8) temporär formschlüssig miteinander verbindbar sind.

14. Vorrichtung nach Anspruch 13,
**dadurch gekennzeichnet, dass** außenseitig ein auskragender Rand ausgebildet ist, der zur Aufnahme des Behältnisses (5, 6, 7, 8) in ein rahmenförmiges Element (15) dient.

15. Vorrichtung nach einem der Ansprüche 1 bis 14,
**dadurch gekennzeichnet, dass** das Behältnis (5, 6, 7, 8, 11) zumindest teilweise aus einem elektrisch leitenden Material besteht, mit einem solchen beschichtet und/oder damit verschlossen ist.

16. Vorrichtung nach einem der Ansprüche 1 bis 15,
**dadurch gekennzeichnet, dass** im Behältnis (5, 6, 7, 8, 11) ein von den zu erwärmenden Speisen separater Raum zur Aufnahme von Wasser oder einem Wasser enthaltenden Gebilde vorhanden ist.

17. Vorrichtung nach einem der Ansprüche 1 bis 16,
**dadurch gekennzeichnet, dass** das Behältnis (5, 6, 7, 8, 11) zumindest teilevakuierbar ist.

18. Vorrichtung nach einem der Ansprüche 1 bis 17,
**dadurch gekennzeichnet, dass** im Scharnier eines Deckels des Behältnisses (5, 6, 7, 8, 11) Wasser temporär gespeichert ist.

19. Vorrichtung nach einem der Ansprüche 1 bis 18,
**dadurch gekennzeichnet, dass** ein rahmenförmiges Element (15) zum Einsetzen von Behältnissen (5, 6, 7, 8) vorhanden ist.

20. Vorrichtung nach Anspruch 19,
**dadurch gekennzeichnet, dass** die Behältnisse (5, 6, 7, 8) mit einem Deckel des rahmenförmigen Elementes (15) verschlossen sind.

21. Vorrichtung nach einem der Ansprüche 1 bis 20,
**dadurch gekennzeichnet, dass** für eine Temperaturmessung und Steuerung bzw. Regelung der Erwärmung Hilfsspulen oder Temperatursensoren vorhanden sind.
